(19) Europäisches Patentamt
European Patent Office
Office européen des brevets

(11) **EP 2 244 372 B1**

(12) **EUROPÄISCHE PATENTSCHRIFT**

(45) Veröffentlichungstag und Bekanntmachung des Hinweises auf die Patenterteilung:
**04.03.2015 Patentblatt 2015/10**

(51) Int Cl.:
***H02P 9/10*** *(2006.01)*

(21) Anmeldenummer: **09012812.5**

(22) Anmeldetag: **23.01.2003**

(54) **Schaltungsanordnung zum Einsatz bei einer Windenergieanlage**

Switching device for a wind power plant

Dispositif de circuit pour une installation éolienne

(84) Benannte Vertragsstaaten:
**AT BE BG CH CY CZ DE DK EE ES FI FR GB GR HU IE IT LI LU MC NL PT SE SI SK TR**

(30) Priorität: **29.01.2002 DE 10203468**
**18.02.2002 DE 10206828**

(43) Veröffentlichungstag der Anmeldung:
**27.10.2010 Patentblatt 2010/43**

(62) Dokumentnummer(n) der früheren Anmeldung(en) nach Art. 76 EPÜ:
**03704240.5 / 1 470 633**

(73) Patentinhaber: **Vestas Wind Systems A/S**
**8200 Aarhus N (DK)**

(72) Erfinder: **Feddersen, Lorenz**
**25853 Drelsdorf (DE)**

(74) Vertreter: **Samson & Partner et al**
**Widenmayerstraße 5**
**80538 München (DE)**

(56) Entgegenhaltungen:
**JP-A- 7 067 393  JP-A- 7 194 196**

- **PATENT ABSTRACTS OF JAPAN Bd. 2000, Nr. 26, 1. Juli 2002 (2002-07-01) -& JP 2001, 268992, A, (TOSHIBA CORP), 28. September 2001 (2001-09-28)**
- **"Wind turbine grid connection and interaction", , 1. Januar 2001 (2001-01-01), XP55021576, Gefunden im Internet: URL:http://ec.europa.eu/ energy/technology/ projects/doc/ 2001_fp5_brochure_energy_env. pdf [gefunden am 2012-03-12]**

- **EHRENBERG J ET AL: "WINDKRAFTANLAGEN FUER DEN MEGAWATT-BEREICH DIGITALE STEUERUNG EINES DOPPELT GESPEISTEN ASYNCHRONGENERATORS OHNE LAGEGEBER, TEIL 1", ELEKTRONIK, IRL PRESS LIMITED, DE, Bd. 50, Nr. 18, 4. September 2001 (2001-09-04), Seiten 60-67, XP001168391, ISSN: 0013-5658**
- **HOFMANN W: "Optimal reactive power splitting in wind power plants controlled by double-fed induction generator", AFRICON, 1999 IEEE CAPE TOWN, SOUTH AFRICA 28 SEPT.-1 OCT. 1999, PISCATAWAY, NJ, USA,IEEE, US, Bd. 2, 28. September 1999 (1999-09-28), Seiten 943-948, XP010367303, DOI: 10.1109/AFRCON. 1999.821898 ISBN: 978-0-7803-5546-0**
- **EGGERT B ED - EPE ASSOCIATION: "1.5 MW WIND POWER STATION WITH LOW AC-LINE DISTORTION USING A STANDARD DOUBLY-FED GENERATOR SYSTEM WITH FIELD ORIENTATION CONTROL", EPE '97. 7TH. EUROPEAN CONFERENCE ON POWER ELECTRONICS AND APPLICATIONS. TRONDHEIM, SEPT. 8 - 10, 1997; [EPE . EUROPEAN CONFERENCE ON POWER ELECTRONICS AND APPLICATIONS], BRUSSELS, EPE ASSOCIATION, B, Bd. CONF. 7, 8. September 1997 (1997-09-08), Seiten 2739-2742, XP000792366, ISBN: 978-90-75815-02-3**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- RAMOS C J ET AL: "CURRENT SOURCE INVERTER FOR A 400 KW OCEAN WAVES INDUCTION GENERATOR", 8TH EUROPEAN CONFERENCE ON POWER ELECTRONICS AND APPLICATIONS. LAUSANNE, CH, SEPT. 7 - 9, 1999; [EPE . EUROPEAN CONFERENCE ON POWER ELECTRONICS AND APPLICATIONS], EPE ASSOCIATION, BRUSSELS, BE, Bd. CONF. 8, Nr. CONF. 08, 7. September 1999 (1999-09-07), Seiten 1-09, XP000878480, ISBN: 978-90-75815-04-7

**Beschreibung**

Die Erfindung betrifft eine insbesondere zum Einsatz bei einer Windenergieanlage mit variabler Drehzahl bestimmte Schaltungsanordnung umfassend einen doppeltgespeisten Asynchrongenerator, einen Zusatzwiderstand und einen Umrichter.

Solche zum Einsatz bei drehzahlvariablen Windenergieanlagen vorgesehene Schaltungsanordnungen werden in der Praxis vielfach eingesetzt und zählen daher durch offenkundige Vorbenutzung zum Stand der Technik. Im Betrieb erweist es sich jedoch beim Einsatz doppeltgespeister Asynchronmaschinen (DASM) als hinderlich, dass diese sich im Falle eines Netzkurzschlusses auf der Mittelspannungsebene vom Netz trennen. Daher kann die erwünschte Netzstabilisierung durch eine Windkraftanlage, die mit einer doppeltgespeisten Asynchronmaschine betrieben wird, nicht realisiert werden.

In der Vergangenheit erfolgte die erforderliche Netzstabilisierung daher durch die Netzbetreiber mit konventionellen Kraftwerken. Aufgrund der schnell steigenden Anzahl der Windkraftanlagen und der damit verbundenen rasch ansteigenden Leistung, die inzwischen die Größe konventioneller Kraftwerke erreicht haben, müssen jedoch auch die Anforderungen der Windkraftanlagen an diejenigen der konventionellen Kraftwerke angepasst werden. Insbesondere wird zunehmend eine dauerhafte Netzkoppelung verlangt, damit die Windenergieanlage während und nach beendetem Mittelspannungsnetzkurzschluss das Netz wieder aufbauen und stabilisieren kann.

JP 7 194 196 A beschreibt einen Umrichten für einen doppelt gespeisten Asynchrongenerator einer Windkraftanlage, der in Fall eines Netzkurzschlusses vorübergehend vom Netz abgeschaltet wird. Zur Vermeidung von Überspannung raum in diesem Zeitraum Energie über einen Widerstand abgeführt werden. Ein ähnlicher Umrichter für einen Hydrogenerator ist aus JP 7 067 393 bekannt.

JP 2001 268 992 beschreibt einen doppeltgespeisten Asynchrongenerator mit einem Umrichter für einen Hydrogenerator. Der Umrichte wird bei einem Kurzschluss zum Zweor der Netzstützung vor Beendigung des Kurzschlusses wieder in Betrieb genommen.

Der Erfindung liegt die Aufgabe zugrunde, eine Schaltungsanordnung zum Einsatz bei Windkraftanlagen mit einer Asynchronmaschine zu schaffen, mittels der die erhöhten Anforderngen an moderne Windkraftanlagen, insbesondere hinsichtlich der Netzstabilisierung, erfüllt werden können.

Diese Aufgabe wird erfindungsgemäß mit einer Schaltungsanordnung gemäß den Merkmalen des Patentanspruchs 1 gelöst. Die Unteransprüche betreffen besonders zweckmäßige Weiterbildungen der Erfindung.

Erfindungsgemäß ist also eine Schaltungsanordnung vorgesehen, bei welcher der Zusatzwiderstand mittels eines schnellen Schalters derart regelbar ist, dass der Umrichter im Netzkurzschlussfall zumindest teilweise vorübergehend abschaltbar ist, um den Rotorstrom mittels des Zusatzwiderstandes kurzzeitig zu übernehmen, und nach Abklingen des Rotorkurzschlussstromes zur aktiven Einkopplung eines Kurzschlussstromes ins Netz wieder zuschaltbar ist.

Mit der erfindungsgemäßen Schaltungsanordnung wird im Netzkurzschlussfall kapazitiver Strom oder induktiver Strom in den Kurzschluss geliefert, weil dadurch je nach Anforderung der Netzbetreiber das Netz optimal stabilisiert werden kann. Üblicherweise wird ein kapazitiver Strom erwünscht, um die induktiven Netzverbraucher zu versorgen.

Wenn bei wiederkehrender Netzspannung der Rotorwechselrichter abgeschaltet und ein Überstrom dann durch den regelbaren Widerstand übernommen wird, um nach Abklingen des Überstromes und Abschalten des geregelten Widerstandes den Rotorstrom aktiv zu übernehmen, wird eine mögliche Abschaltng bzw, Netztrennung der Windenergieanlage bei insbesondere plötzlich wiederkehrender Netzspannung vermieden.

Hierdurch können die erhöhten Netzanforderungen im Betrieb der mit einem Asynchrongenerator ausgestatteten Windkraftanlage zur Netzstabilisierung optimal erfüllt werden, weil dabei im Falle eines Netzkurzschlusses auf der Mittelspannungsebene keine Trennung vom Netz eintritt. Hierzu ist im Rotorkreis beispielsweise ein als regelbarer Lastwiderstand ausgeführter Zusatzwiderstand oder ein Crow-Bar, der hierzu mit dem Zusatzwiderstand ausgestattet ist, eingefügt worden, der beim Eintreten des Netzkurzschlussfalls die Rotorkurzschlussenergie aufnimmt und anschließend, nach Abklingen des Kurzschlussstromes, abgeschaltet wird. Der Lastwiderstand wird mit einem insbesondere aktiv abschaltbaren Schalter geregelt, der insbesondere kein natürlich kommutierter Thyristor ist. Der vorhandehe Rotorwechselrichter des Vier-Quadranten-Umrichters wird sofort nach Eintreten des Netzkurzschlusses kurzzeitig deaktiviert und nach Abklingen des Kurzschlussausgleichsvorganges, wobei der Schwellenwert vorteilhafter Weise unterhalb eines Rotorwechselrichternennstromes liegt, wieder aktiviert und speist dann währen des Netzkurzschlusses und bei wiederkehrender Netzspannung die erforderliche Leistung in das Netz.

Als besonders vorteilhaft erweist sich dabei eine Abwandlung der vorliegenden Erfindung, bei welcher die Schaltungsanordnung mehrere abhängig oder unabhängig voneinander schaltbare Widerstände aufweist. Hierdurch wird erreicht, dass der hohe Rotorkurzschlussstrom, der häufig 1000 A übersteigt, auf mehrere Schalter aufgeteilt werden kann, da diese abschaltbaren Schalter für den Gesamtstrom sehr aufwendig parallel geschaltet werden müssen.

Besonders vorteilhaft ist auch eine Schaltungsanordnung mit einem Zweipunktregler, zur Regelung des Zusatzwiderstandes, weil dadurch eine sehr einfache, schnelle und robuste Regelung aufgebaut werden kann.

Hierbei erweist sich eine weitere Abwandlung als besonders zweckmäßig, wenn die Regelung des aktiven Schalters mit einer Pulsweitenmodulation mit einer festen Taktfrequenz erfolgt, weil auf diese Weise eine digitale Regelung mit einer festen Taktfrequenz erfolgen kann.

Weiterhin ist es auch besonders Erfolg versprechend, wenn die Regelung des aktiven Schalters mit einem P-Regler, PI-Regler oder PID-Regler erfolgt. Hierdurch wird erreicht, dass beim Eintreten des Netzkurzschlusses der Rotorkurzschlussstrom bzw. die Rotorklemmspannung optimal geregelt werden können.

Außerdem ist nach einer weiteren besonders vorteilhaften Ausgestaltung im Statorkreis kurzzeitig eine Zusatzimpedanz eingefügt, um den Stator und Rotorstrom zu begrenzen. Durch das bedarfsweise Einfügen der Zusatzimpedanz kann der Stator- und Rotorstrom bei wiederkehrender Netzspannung begrenzt werden.

Besonders zweckmäßig ist auch eine Ausführungsform, bei der im Statorkreis parallel zur Zusatzimpedanz ein schnelles Schütz eingesetzt ist, um so die Zusatzimpedanz im normalen Betrieb zu überbrücken und keine Verluste zu erzeugen.

Ferner ist es auch besonders Erfolg versprechend, wenn im Statorkreis parallel zum Widerstand zumindest ein Thyristor mit natürlicher Kommutierung eingesetzt ist. Hierdurch wird erreicht, dass, verglichen mit aktiv abschaltbaren Schaltern, reduzierte Verluste im Normalbetrieb entstehen und die Kosten geringer sind.

Weiterhin kann die Schaltungsanordnung in besonders vorteilhafter Weise so ausgeführt sein, dass am Zwischenkreis des Umrichters ein geregelter Widerstand betrieben wird, weil dadurch einige Bauteile in der Crow-Bar gespart werden können und die Regelung des Rotorwechselrichters dauerhaft den Rotorphasenstrom misst.

Eine andere besonders zweckmäßige Ausgestaltung der Erfindung wird auch dann erreicht, wenn sowohl in der Crow-Bar als auch am Zwischenkreis des Umrichters ein geregelter Widerstand betrieben wird. Hierdurch wird erreicht, dass eine Leistungsaufteilung erfolgt und kleinere Einzelschalter eingesetzt werden können. Gegen Ende des Ausgleichsvorganges des Rotorkurzschlussstromes erfolgt die Übernahme des gesamten Rotorstromes, und die Regelung des Rotorwechselrichters misst dann den gesamten Phasenstrom.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in

Fig.1  eine erfindungsgemäße Schaltungsanordnung;

Fig.2  einen möglichen Kurzschlussverlauf;

Fig.3  Schaltungsanordnung mit regelbarem Rotorwiderstand und Zusatzstatorwiderstand;

Fig.4  einen Spannungs- und Strom-Zeitverlauf mit Zusatzwiderstand;

Fig.5  Schaltungsanordnung mit verstärkten Inverterdioden und regelbarem Lastwiderstand im Zwischenkreis.

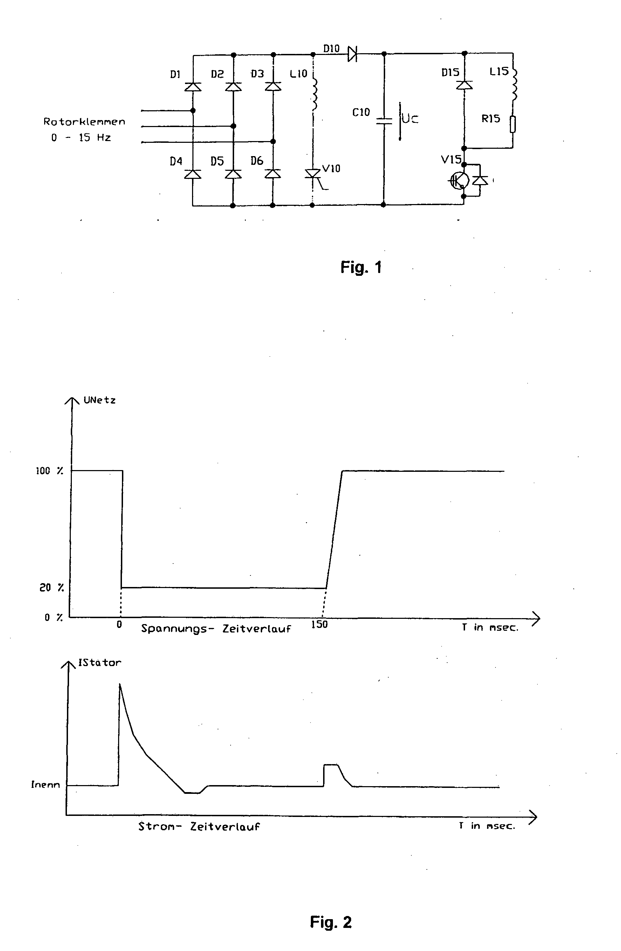

Figur 1 zeigt eine erfindungsgemäße Schaltungsanordnung. Im Normalbetrieb ist ein Schalter V15, beispielsweise IGBT, GTO, IGCT, abgeschaltet und die Crow-Bar ist völlig inaktiv. Der volle Rotorstrom fließt in einen Umrichter und wird von diesem geregelt. Sofern ein Netzkurzschluss auf der Mittelspannung auftritt, liefert ein Asynchrongenerator bedingt durch die volle Erregung einen Ausgleichskurzschlussstrom zum Kurzschluss. Der Strom wird nur durch die Streuinduktivitäten des Asynchrongenerators und Mittelspannungstransformators begrenzt, wobei der maximale Strom folgenden Wert erreicht:

$$I_{Stator} \approx 1.8 \bullet \frac{U_{Netz}}{Xtr + X1 + X2'}$$

Dabei ist $Xtr$ die gesamte Streuimpedanz des Transformators, X1 die Streuimpedanz des Stators und X2' die Streuimpedanz des Rotors. Der maximale Statorstrom liegt bei einem Kurzschluss an der Mittelspannung in der Praxis in der Größenordnung von bis zu dem 8-fachen Statornennstrom. Der Rotorstrom ist transformatorisch mit dem Statorstrom gekoppelt und erreicht auch bis zu dem 8-fachen des Rotornennstromes. Dieser hohe Ausgleichstrom kann nicht technisch sinnvoll vom Umrichter geführt bzw. aufgenommen werden. Beim Eintritt des Kurzschlusses wird ein Rotorwechselrichter bedingt durch den Überstrom abgeschaltet. Der Rotorstrom fließt weiter über Freilaufdioden des Rotorwechselrichters und lädt einen Zwischenkreis C3 auf. Gleichzeitig steigt die Spannung über einen Kondensator C10 in der Crow-Bar. Beim Erreichen eines Spannungsgrenzwertes über den Kondensator C10 wird der Schalter V15 eingeschaltet. Ein Widerstand R15 übernimmt den gesamten gleichgerichteten Rotorstrom, und die Spannung über den Kondensator C10 sinkt unter den Spannungsgrenzwert, so dass der Schalter V15 abgeschaltet wird. Die Spannung steigt anschließend über den Kondensator C10, bedingt durch den Rotorstrom, wieder an und der Schalter V15 wird wieder eingeschaltet. Die Stromänderungsgeschwindigkeit und damit auch die Taktfrequenz werden durch L15 bestimmt. Die Taktfrequenz liegt bis in den kHz-Bereich und kann nicht durch natürliche Kommutierung von Thyristoren erfolgen, da die Rotorfrequenz bei maximal 15 Hz liegt. Mit dieser Zweipunkt-Regelung wird eine konstante Gegenspannung für die Rotorspannung erzeugt und der Ausgleichstrom klingt bedingt durch die konstant hohe Gegenspannung in kürzester Zeit ab. Der gesamte Strom ist vom Rotorwechselrichter in die Crow-Bar kommutiert. Der Umrichterstrom ist nahe null. Der Crow-Bar Strom wird von der Steuerkarte gemessen und ausgewertet. Der Lastwiderstand ist für den maximalen Strom ausgelegt und die Einschaltdauer des Schalters V15 ist anfangs nahe 100 %. Mit sinkendem Ausgleichstrom wird die Einschaltdauer geringer und liegt beim Rotornennstrom bei ca. 12 %, was in etwa 1/8 des maximalen Stromes entspricht. Denkbar wären auch mehrere Widerstände, die einzeln zu und abgeschaltet werden können. Unterschreitet der Ausgleichstrom den Rotornennstrom, so wird der Schalter V15 ganz abgeschaltet und der Rotorstrom kommutiert in den Umrichter zurück. Der Umrichter nimmt seinen Betrieb und die Regelung auf und speist aktiv in den Kurzschluss. Während der regelbare Widerstand aktiv ist, kann der Netzwechselrichter abgeschaltet werden, es ist aber auch der gleichzeitige Betrieb möglich. In der Crow-Bar ist aus Sicherheitsgründen ein Thyristor V10 vorgesehen, der selbständig die Spannung misst und bei Versagen von dem Schalter V15 oder beim direkten Generatorkurzschluss gezündet wird. L10 verhindert einen zu schnellen Stromanstieg, um den Thyristor V10 nicht zu zerstören. Dabei verhindert D10 eine Schnellentladung von einem Kondensator C10 durch den Schalter V15. Die Regelung des Schalters V15 kann entweder direkt in der Crow-Bar oder durch die Steuerkarte des Umrichters erfolgen.

Ein möglicher Kurzschlussverlauf ist in Fig. 2 dargestellt, wobei die gestrichelte Linie die Mittelspannung und die durchgezogene Linie die Netzspannung darstellt. Der Kurzschluss tritt im Augenblick 0 msec. auf. Der Strom springt sofort auf den Maximalwert und klingt dann, bedingt durch den Ausgleichsvorgang, ab. Der hohe Strom wird von der Crow-Bar bzw. Widerstand aufgenommen. Beim Unterschreiten des Rotornennstromes wird der Strom wieder durch den Umrichter übernommen und geregelt. Der Generator wird übererregt und liefert während des Netzkurzschlusses kapazitive Blindleistung ans Netz. Es kann aber auch induktiver Strom in den Kurzschluss gespeist werden. Die Vorgabe kann frei gewählt werden. Die Netzspannung liegt, bedingt durch den Spannungsabfall über den Mittelspannungstransformator, in der Größe von ~ 20 % von der Nennspannung. Im Augenblick der Spannungswiederkehr steigt die Spannung nicht schlagartig auf den Nennwert, sondern über eine dU/dt Flanke. Durch die Flankensteilheit der wiederkehrenden Netzspannung und der Zeitkonstante des Generators tritt ein dynamischer Überstrom im Stator und Rotor auf. Dieser Überstrom muss vom Umrichter geliefert werden können und führt nicht zur Abschaltung des Rotorwechselrichters. Ist die Flankensteilheit zu groß oder liegt ein Phasenfehler zwischen der Generatorspannung und der wiederkehrenden Netzspannung vor, so wird der dynamische Überstrom bzw. Ausgleichsstrom zu hoch, der Rotorwechselrichter wird abgeschaltet. Der regelbare Widerstand übernimmt auch hier kurzzeitig den Ausgleichsstrom und nach Unterschreiten des Rotornennstromes wird der Widerstand abgeschaltet und der Rotorwechselrichter übernimmt wieder seine Regelung. Während des Spannungseinbruches und bei wiederkehrender Spannung wird der regelbare Widerstand kurzzeitig aktiviert. Der Rotorwechselrichter ist während dieser Zeit abgeschaltet.

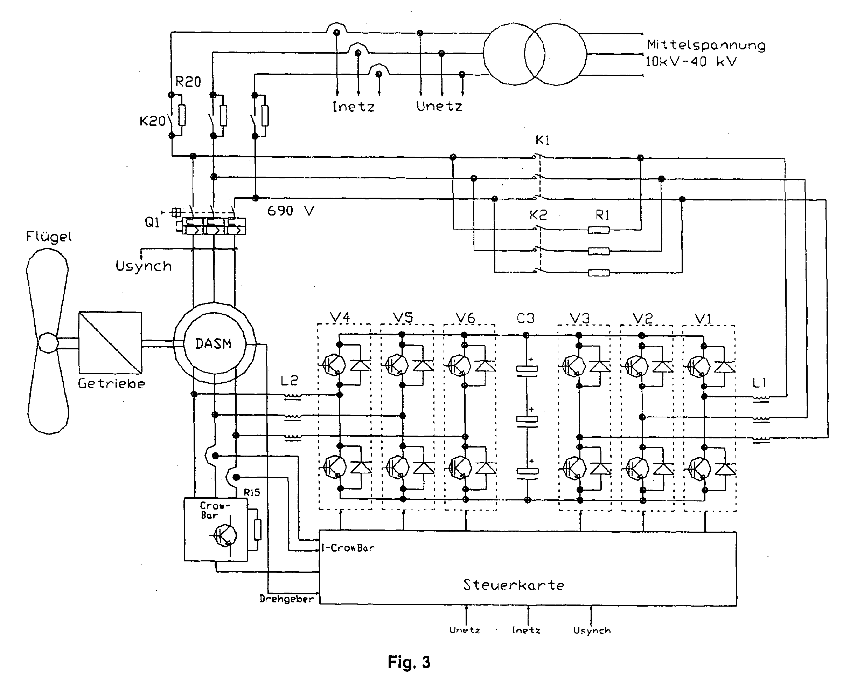

Bei extrem schnellen Spannungsanstiegszeiten kann in den Statorkreis eine Zusatzimpedanz, beispielsweise durch einen Widerstand oder eine Drossel, eingefügt werden. Ein solches System ist in der Figur 3 dargestellt. Zwischen dem Mittelspannungstransformator und dem Generator- Umrichter -system ist ein Schütz K20 eingefügt. Über dem Schütz K20 liegt parallel ein Widerstand R20. Tritt der Kurzschlussfall auf, so wird der Schütz K20 geöffnet und der Statorstrom fließt durch den Widerstand R20.

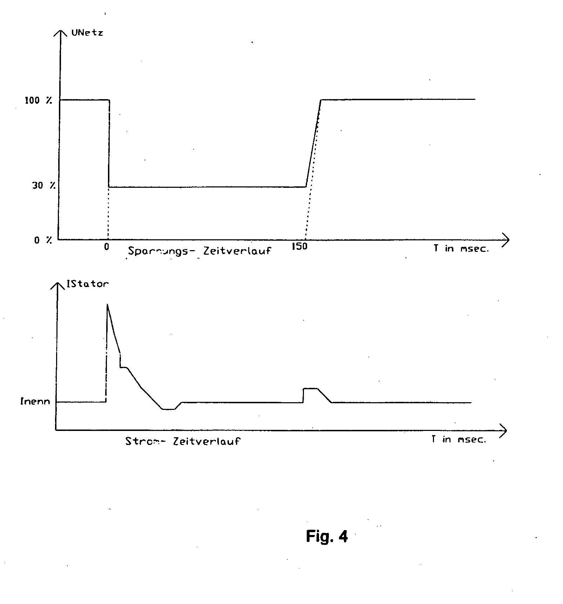

In der Figur 4 ist der Spannungs-Zeitverlauf mit Zusatzwiderstand dargestellt. Der Statorstrom wird begrenzt und klingt schneller, als nur mit der geregelten Crow-Bar, ab. Das Schütz muss sehr schnell schalten, damit bei sehr kurzen Spannungseinbrüchen der Widerstand aktiv ist. Es kann auch ein antiparalleler Thyristorschalter mit natürlicher Kommutierung eingesetzt werden, der beispielsweise eine Abschaltzeit von 6,7 msec. bei 50 Hz aufweist. Dieses ergibt einen schnellen Schalter, aber hat den Nachteil von hohen Verlusten, verglichen mit der Schütz-Lösung. In der Figur 4 ist der Schalter nach 10 msec. geöffnet. Nach dem Ausgleichsvorgang übernimmt der Umrichter wiederum die Regelung. Die Restnetzspannung ist, bedingt durch den zusätzlichen Spannungsabfall über den Widerstand, höher als ohne Zusatzimpedanz im Stator. Bei der wiederkehrenden Spannung begrenzt der zusätzliche Widerstand den dynamischen Statorstromanstieg und erlaubt höhere Spannungsflanken bzw. geringere Überströme.

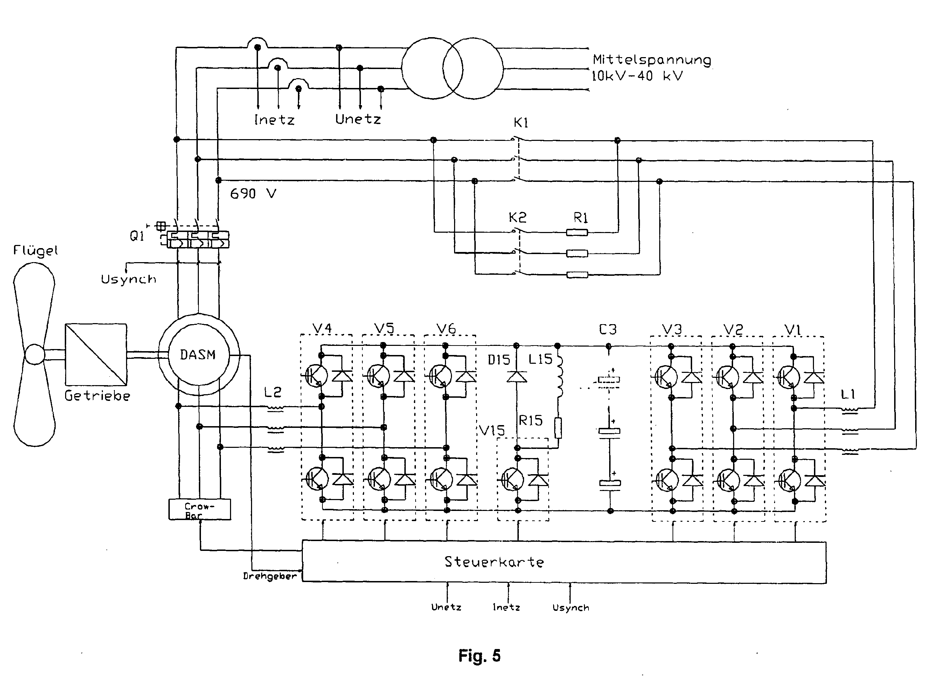

Die Freilaufdioden von IGBT-Modulen sind nicht für sehr hohe Pulsströme ausgelegt. Daher wurden die Bauteile des geregelten Widerstandes in die Crow-Bar gelegt. Eine Schaltungsanordnung mit leistungsstarken Freilaufdioden zeigt Figur 5. Der Schalter V15 wird direkt mit dem Zwischenkreis des Umrichters gekoppelt und regelt direkt die Zwischenkreisspannung. Dieses würde den gesamten Aufbau vereinfachen. Die zusätzliche Standard-Crow-Bar bleibt für Extremsituationen erhalten.

Denkbar ist auch der völlige Verzicht der Crow-Bar. In diesem Fall muss der Zusatzwiderstand für alle Extremsituationen ausgelegt werden. Im Kurzschlussfall werden die Rotorwechselrichter IGBTs abgeschaltet und der Rotorkurzschlussstrom fließt durch die Freilaufdioden in den Zwischenkreis. Beim Überschreiten eines Grenzwertes wird der Zusatzwiderstand aktiviert und die Kurzschlussenergie im Zusatzwiderstand aufgenommen. Nach Abklingen des Kurzschlussstromes wird der Rotorwechselrichter wieder aktiviert und der Zusatzwiderstand wird abgeschaltet. Es kann auch zuerst der Zusatzwiderstand abgeschaltet und der Rotorwechselrichter zugeschaltet werden. Es ist auch ein gleichzeitiger Betrieb des Zusatzwiderstandes und des Rotorwechselrichters möglich.

**Patentansprüche**

1. Windenergieanlage mit variabler Drehzahl umfassend eine Schaltungsanordnung mit einem doppelt gespeisten Asynchrongenerator, einem Zusatzwiderstand, und einem Umrichter mit einem Rotorwechselrichter, wobei

   die Schaltungsanordnung einen Schalter (V 15) und Mittel zum Regeln des Betriebs es Zusatzwiderstands (R15) einschließt, so dass der Rotorwechselrichter im Netzkurzschlussfall vorübergehend abschaltbar und der Rotorstrom kurzzeitig vom Zusatzwiderstands übernehmbar ist,

   **dadurch gekennzeichnet, dass**

   der Rotorwechselrichter nach Abklingen des Rotorkurzschlussstroms zur aktiven Einkopplung eines Kurzschlussstroms ins Netz wieder zuschaltbar ist, dass die Schaltungsanordnung so eingerichtet ist, dass im Fall eines Netzkurzschlusses dem Kurzschluss von der Windenergieanlage ein kapazitiver Strom oder ein induktiver Strom zugeführt wird, und dass der Rotorwechselrichter auch bei wiederkehrender Netzspannung abschaltbar ist, um einen Überstrom dann durch den Zusatzwiderstand (R15) zu übernehmen, und nach Abklingen dieses Überstroms der Zusatzwiderstand (R15) abschaltbar und der Rotorstrom durch den Rotorwechselrichter übernehmbar ist.

2. Windenergieanlage nach Anspruch 1, **dadurch gekennzeichnet, dass** der Umrichter nach Abklingen des Rotorkurzschlussstromes unterhalb eines Rotorwechselrichternennstromes zuschaltbar ist.

3. Windenergieanlage nach den Ansprüchen 1 oder 2, **dadurch gekennzeichnet, dass** die Schaltungsanordnung mehrere abhängig oder unabhängig voneinander schaltbare Widerstände (R15) aufweist.

4. Windenergieanlage nach zumindest einem der vorhergehenden Ansprüche, **gekennzeichnet durch** einen Zweipunktregler zur Regelung des Zusatzwiderstandes (R15).

5. Windenergieanlage nach zumindest einem der vorhergehenden Ansprüche, **dadurch gekennzeichnet, dass** die Regelung des Schalters (V 15) mit einer Pulsweitenmodulation mit einer festen Taktfrequenz erfolgt.

6. Windenergieanlage nach zumindest einem der vorhergehenden Ansprüche, **dadurch gekennzeichnet, dass** der Zusatzwiderstand (R15) als Bestandteil eines Crow-Bars ausgeführt ist.

7. Windenergieanlage nach Anspruch 6, **dadurch gekennzeichnet, dass** der Schalter (V 15) ein zwanggeschalteter Schalter ist und die Mittel zum Steuern des Betriebs der Crow-Bar dazu eingerichtet ist, den Schalter (V 15) zu schalten.

8. Windenergieanlage nach Anspruch 6 oder 7, **dadurch gekennzeichnet, dass** der Crow-Bar-Schalter (V15) unmittelbar von der Umrichtersteuerkarte gesteuert wird.

9. Windenergieanlage nach zumindest einem der vorhergehenden Ansprüche, **dadurch gekennzeichnet, dass** im Statorkreis kurzzeitig eine Zusatzimpedanz (R20) eingefügt ist, um den Stator und Rotorstrom zu begrenzen.

10. Windenergieanlage nach zumindest einem der vorhergehenden Ansprüche, **dadurch gekennzeichnet, dass** im Statorkreis parallel zum Widerstand (R20) ein schnelles Schutz (K20) eingesetzt ist.

11. Windenergieanlage nach zumindest einem der vorhergehenden Ansprüche, **dadurch gekennzeichnet, dass** im Statorkreis parallel zum Widerstand (R20) zumindest ein Thyristor mit natürlicher Kommutierung eingesetzt ist.

12. Windenergieanlage nach zumindest einem der vorhergehenden Ansprüche, **dadurch gekennzeichnet, dass** der Zusatzwiderstand (R15) am Zwischenkreis des Umrichter angeordnet ist.

13. Windenergieanlage nach zumindest einem der Ansprüche 6 bis 10, **dadurch gekennzeichnet, dass** sowohl in der Crow-Bar als auch am Zwischenkreis des Umrichters ein Zusatzwiderstand (R15) angeordnet sind.

14. Verfahren zum Betrieb einer Windenergieanlage mit variabler Drehzahl umfassend eine Schaltungsanordnung mit einem doppelt gespeisten Asynchrongenerator, einem Zusatzwiderstand (R15), und einem Umrichter mit einem Rotorwechselrichter, wobei

    die Schaltungsanordnung einen Schalter (V 15) und Mittel zum Regeln des Betriebs des Zusatzwiderstands (R15) einschließt, so dass der Rotorwechselrichter im Netzkurzschlussfall vorübergehend abgeschaltet und der Rotorstrom kurzzeitig vom Zusatzwiderstands (R15) übernommen wird, **dadurch gekennzeichnet, dass**

    der Rotorwechselrichter nach Abklingen des Rotorkurzschlussstroms zur aktiven Einkopplung eines Kurzschlussstroms ins Netz wieder zugeschaltet wird, dass die Windenergieanlage im Fall eines Netzkurzschlusses dem Kurzschluss von der Schaltungsanordnung ein kapazitiven Strom oder ein induktiven Strom zugeführt wird, und dass der Rotorwechselrichter bei wiederkehrender Netzspannung abgeschaltet wird, um einen Überstrom durch den Zusatzwiderstand (R15) zu übernehmen, und dass nach Abklingen dieses Überstroms der Widerstand (R15) abgeschaltet wird und der Rotorstrom durch den Rotorwechselrichter übernommen wird.

15. Verfahren nach Anspruche 14, **dadurch gekennzeichnet, dass** der Zusatzwiderstand (R15) durch einen Schalter (V 15) geregelt wird.

16. Verfahren nach Anspruch 15, **dadurch gekennzeichnet, dass** der Schalter (V 15) durch einen Zweipunktregler geregelt wird.

17. Verfahren nach einem der Ansprüche 14 bis 16, **dadurch gekennzeichnet, dass** der Schalter (V 15) durch eine Pulsbreitenmodulation bei einer festgelegten Taktfrequenz geregelt wird.

## Claims

1. Variable speed wind energy plant having a switching arrangement comprising a double feed asynchronous generator, an additional resistance and a frequency converter with a rotor switching rectifier, whereby the switching arrangement includes a switch (V15) and means to control the operation of the additional resistance (R15), so that the rotor switching rectifier can be temporarily disconnected in the event of a network short-circuit and the rotor current can be provided briefly by the additional resistance,
   **characterised in that**, after the rotor short-circuit current has attenuated, the rotor switching rectifier can be switched again to actively couple a short-circuit current into the network, that the switching arrangement is arranged in such a way that in the event of a network short-circuit, a capacitive current or an inductive current can be fed to the short-circuit from the wind energy plant, and that the rotor switching rectifier can also be disconnected when the network voltage returns in order to absorb excess current through the additional resistance (R15) and the additional resistance (R15) can be disconnected after the excess current has attenuated and the rotor current can be picked up by the rotor switching rectifier.

2. Wind energy plant according to Claim 1, **characterised in that** the frequency converter can be switched on once the attenuation of the rotor short-circuit current falls below a nominal rotor switching current level.

3. Wind energy plant according to Claims 1 or 2, **char-**acterised in that the switching arrangement comprises a number of resistances (R15), which can be switched dependently or independently of each other.

4. Wind energy plant according to at least one of the preceding claims, **characterised by** a two-position controller to control the additional resistance (R15).

5. Wind energy plant according to at least one of the preceding claims, **characterised in that** the control of the switch (V15) is effected by means of pulse width modulation with a fixed pulse rate.

6. Wind energy plant according to at least one of the preceding claims, **characterised in that** the additional resistance (R15) is in the form of a component of a crow-bar.

7. Wind energy plant according to Claim 6, **characterised in that** the switch (V15) is a forced operation switch and that the means of controlling the operation of the crow-bar are so designed to operate the switch (V15).

8. Wind energy plant according to Claim 6 or 7, **characterised in that** the crow-bar switch (V15) is controlled directly by the frequency converter card.

9. Wind energy plant according to at least one of the preceding claims, **characterised in that** an additional impedance (R20) is temporarily inserted into the stator circuit in order to limit the stator and the rotor current.

10. Wind energy plant according to at least one of the preceding claims, **characterised in that** a fast-action protection (K20) is inserted into the stator circuit in parallel to the resistance (R20).

11. Wind energy plant according to at least one of the preceding claims, **characterised in that** at least one thyristor with natural commutation is inserted into the stator circuit in parallel to the resistance (R20).

12. Wind energy plant according to at least one of the preceding claims, **characterised in that** an additional resistance (R15) is arranged in the intermediary circuit of the frequency converter.

13. Wind energy plant according to at least one of the above Claims 6 to 10, **characterised in that** an additional resistance (R15) is arranged in both the crowbar and the frequency converter.

14. Process for the operation of a variable speed wind energy plant comprising a switching arrangement with a double-feed asynchronous generator, an additional resistance (R15) and a frequency converter with a rotor switching rectifier, whereby the switching arrangement encompasses a switch (V15) and means to regulate the operation of the additional resistance (R15), so that the frequency converter is temporarily disconnected in the event of a network short-circuit and the rotor current supply is briefly taken over by the additional resistance (R15), **characterised in that** after the rotor short-circuit current has attenuated the rotor switching rectifier is switched to actively couple a short-circuit current into the network, that in the event of a network short-circuit a capacitive or an inductive current is fed to the short-circuit by the switching arrangement and that the rotor switching rectifier is disconnected when the network voltage is reinstated in order to absorb any excess current by the additional resistance (R15) and that the resistance (R15) is disconnected after the attenuation of this excess current and the rotor current feed is taken over by the rotor switching rectifier.

15. Process according to Claim 14, **characterised in that** the additional resistance (R15) is regulated by a switch (V15).

16. Process according to Claim 15, **characterised in that** the switch (V15) is controlled by a two-position controller.

17. Process according to any one of the Claims 14 to 16, **characterised in that** the switch (V15) is regulated by pulse width modulation with a fixed pulse frequency.

**Revendications**

1. Eolienne à vitesse variable comprenant un mode de couplage avec un générateur asynchrone à double alimentation, une résistance supplémentaire et un convertisseur avec un onduleur de rotor, le mode de couplage incluant un commutateur (V15) et des moyens pour régler le fonctionnement de la résistance supplémentaire (R15), de sorte que l'onduleur de rotor peut être déconnecté temporairement en cas de court-circuit du réseau et le courant du rotor pris en charge momentanément par la résistance supplémentaire,
**caractérisée en ce que**
l'onduleur de rotor, après l'évanouissement du courant de court-circuit du rotor, peut être reconnecté pour l'injection active d'un courant de court-circuit dans le réseau, **en ce que** le mode de couplage est aménagé pour qu'en cas de court-circuit sur le réseau, l'éolienne amène un courant capacitif ou un courant inductif au court-circuit et **en ce que** l'onduleur de rotor puisse être également déconnecté en cas de retour de la tension afin que la résistance supplémentaire (R15) prenne alors une surintensité en charge et la résistance supplémentaire (R15) puisse être déconnectée après l'évanouissement de cette surintensité et le courant de rotor pris en charge par l'onduleur de rotor.

2. Eolienne selon la revendication 1,
**caractérisé en ce que**
le convertisseur peut être commuté après l'évanouissement du courant de court-circuit du rotor en dessous d'un courant nominal de l'onduleur de rotor.

3. Eolienne selon les revendications 1 ou 2,
**caractérisée en ce que**
le mode de couplage présente plusieurs résistances (R15) pouvant être commutées en fonction ou indépendamment l'une de l'autre.

4. Eolienne selon au moins l'une quelconque des revendications précédentes,
**caractérisée par** un régulateur à deux positions destiné au réglage de la résistance supplémentaire (R15).

5. Eolienne selon au moins l'une quelconque des revendications précédentes,
**caractérisée en ce que**
le commutateur (V15) est réglé par modulation d'impulsions en largeur avec une fréquence d'horloge fixe.

6. Eolienne selon au moins l'une quelconque des revendications précédentes,
**caractérisée en ce que**
la résistance supplémentaire (R15) est réalisée comme un élément constitutif d'un crow-bar.

7. Eolienne selon la revendication 6,
**caractérisée en ce que** le commutateur (V15) est un commutateur fonctionnant en commutation forcée et les moyens destinés à la commande du fonctionnement du crow-bar sont aménagés pour commuter le commutateur (V15).

8. Eolienne selon la revendication 6 ou la revendication 7,
**caractérisée en ce que** le commutateur crow-bar (V15) est commandé directement par la carte de commande du convertisseur.

9. Eolienne selon au moins l'une quelconque des revendications précédentes,
**caractérisée en ce qu'**
une impédance supplémentaire (R20) est ajoutée momentanément dans le circuit du stator afin de limiter le stator et le courant de rotor.

**10.** Eolienne selon au moins l'une quelconque des revendications précédentes,
**caractérisée en ce qu'**
on utilise une protection rapide (K20) dans le circuit du stator en parallèle à la résistance (R20).

**11.** Eolienne selon au moins l'une quelconque des revendications précédentes,
**caractérisée en ce qu'**
on utilise au moins un thyristor à commutation naturelle dans le circuit du stator en parallèle à la résistance (R20).

**12.** Eolienne selon au moins l'une quelconque des revendications précédentes,
**caractérisée en ce que**
la résistance supplémentaire (R15) est disposée sur le circuit intermédiaire du convertisseur.

**13.** Eolienne selon au moins l'une quelconque des revendications 6 à 10,
**caractérisée en ce qu'**
une résistance supplémentaire (R15) est disposée aussi bien dans le crow-bar que dans le circuit intermédiaire du convertisseur.

**14.** Procédé d'exploitation d'une éolienne à vitesse variable comprenant un mode de couplage avec un générateur asynchrone à double alimentation, une résistance supplémentaire (R15) et un convertisseur avec un onduleur de rotor,
le mode de couplage incluant un commutateur (V15) et des moyens pour régler le fonctionnement de la résistance supplémentaire (R15), de sorte que l'onduleur de rotor peut être déconnecté temporairement en cas de court-circuit du réseau et le courant du rotor pris en charge momentanément par la résistance supplémentaire (R15),
**caractérisée en ce que**
l'onduleur de rotor, après l'évanouissement du courant de court-circuit du rotor, peut être reconnecté pour l'injection active d'un courant de court-circuit dans le réseau, **en ce que** l'éolienne amène un courant capacitif ou un courant inductif au court-circuit du mode de couplage en cas de court-circuit du réseau et **en ce que** l'onduleur de rotor puisse être également déconnecté en cas de retour de la tension afin que la résistance supplémentaire (R15) prenne alors une surintensité en charge et la résistance (R15) est déconnectée après l'évanouissement de cette surintensité et le courant de rotor pris en charge par l'onduleur de rotor.

**15.** Procédé selon la revendication 14,
**caractérisé en ce que**
la résistance supplémentaire (R15) est réglée par un commutateur (V15).

**16.** Procédé selon la revendication 15,
**caractérisé en ce que**
le commutateur (V15) est réglé par un régulateur à deux positions.

**17.** Procédé selon l'une quelconque des revendications 14 à 16,
**caractérisé en ce que**
le commutateur (V15) est réglé par modulation d'impulsions en largeur avec une fréquence d'horloge fixe.

**Fig. 1**

**Fig. 2**

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 7194196 A
- JP 7067393 B
- JP 2001268992 B